# EUROPEAN PATENT APPLICATION

(11) **EP 3 128 202 A1**
(43) Date of publication of application: **08.02.2017**
(21) Application number: 15179655.4
(22) Date of filing: 04.08.2015
(51) Int. Cl.: F16F 1/368, B60G 11/02, B60G 17/019, G01B 7/16, G01M 17/04, G01N 3/06

(54) **DAMAGE ASSESSMENT IN COMPOSITE LEAF SPRINGS HAVING ELECTRICAL CONDUCTIVITY**

(71) Applicant: Istanbul Universitesi Teknoloji Transfer Uygulama ve Arastirma Merkezi, 34320 Istanbul (TR); Aktas, Alaattin, 34320 Istanbul (TR); Bal Demirci, Tülay, Instanbul (TR); Duran, Fatih, 34320 Istanbul (TR); Gürkan, Koray, 34320 Istanbul (TR)
(72) Inventor: Aktas, Alaattin, 34320 Istanbul (TR); Bal Demirci, Tülay, 34320 Istanbul (TR); Duran, Fatih, 34320 Istanbul (TR); Gürkan, Koray, 34320 Istanbul (TR)
(74) Representative: Mutlu, Aydin

(57) **Abstract**

The present invention is related to a leaf spring system allowing damage assessment in leaf springs (2) used in the motor vehicles and to a production method of the same. The system of the present invention particularly comprises a leaf spring (2) which comprises a series of fiber fabric layers exposed to polymeric resin with electrically conductive nanoparticles, therefore providing electrical conductivity with nanoparticle matrices along the entire fiber fabric layers; a current generator (6) in order for passage of electrical current throughout said leaf spring (2); a control unit (7) which is connected to both ends of said leaf spring (2) via conductors and measuring the resistance throughout the spring (2) and generating an electrical signal depending on the resistance or the current of the circuit; and a warning means in order to convert the electrical signal generated by said control unit (7) to a warning signal.

## Description

### Technical Field of the Invention

The present invention is related to a leaf spring system allowing damage assessment in leaf springs made of a polymer composite material. The present invention is particularly related to fiber reinforced polymer composite leaf springs comprising a matrix generated with nanoparticle materials and to a system capable of detecting critical failures with electrical conductivity dependent measurement methods.

### Background of the Invention

Leaf springs are particularly an important element of the suspension systems of the vehicles carrying heavy loads. Vehicles are exposed to vibrations and sudden impacts caused by road irregularities while driving. Leaf springs make a contribution to a confortable and secure driving by means of transportation of these types of loadings in a balanced manner. Conventional leaf springs are generally formed by means of positioning a series of longitudinal metal sheets so as to form a series of layers. The thickness and the quantity of said metal sheets are determined according to the load capacity of the vehicle.

Composite materials are the ideal materials for the leaf springs because they have high energy storage capacity, low weight and excellent corrosion resistance. Leaf springs are exposed to fatigue due to the repeated and heavy loadings in working conditions. Damages occured on composite materials due to the impact of fatigue may not be the type of starting from the surface contrary to those in the steels. Invisible matrix cracking in the structures is in the form of fiber breakage and delamination. Therefore, it is very important to determine the damages during service in order to avoid sudden damages occured in the composite leaf spring which is exposed to fatigue.

JPS57110839 discloses one of the studies done in this issue. It is aimed with said study to change fiber reinforced leaf springs having a secondary intermediate member in the leaf layers as an absorber by having an alert at a specific wear value. In this document, conductive fibers are placed on the position in the wear limit of the surface of each leaf layer made of a nonconductive material. Each leaf layer is made of a nonconductive material such as glassfiber. A conductive fiber such as carbon fiber is embedded in wear limit of each layer in production phase. The absorber generates a switching circuit because it is connected electrically to carbon fiber of the uppermost leaf layer. When the lower surface of the absorber comes into contact with carbon fiber, which is located at the wear limit in the adjacent leaf layer, as a result of corrosion, said circuit is switched off. Therefore, the warning lamp lights up. The leaf spring used in this study is multilayered, and is only carbon fiber reinforced. When the corrosion occured in the leaf spring reaches to a critical value, a warning is obtained with a secondary intermediate element as an absorber. Conductivity which would be used for warning is provided by carbon fiber embedded in the material and the metal absorber. Additionally, a structure determining the damage in real time by means of electrical conductivity and reporting the structural damage is not disclosed in this document because of that the generated composite leaf spring has no electrical conductivity as a whole. On the other hand, it is not possible to determine the damage three-dimensionally which may occurs at the transverse, longitudinal, and vertical cross-section of each leaf spring.

Another study done in this field is disclosed in the document JPS60162934. Said study aims at early detection of fatigue damage of a one piece leaf spring produced by a fiber reinforced polymer material. Said objective is realised by electrically detecting the breakage of conductive carbon fibers placed on the uppermost surface or the inner partitions of the fiber reinforced polymer leaf spring. Carbon fibers controlled by electrical conductivity measurement methods are placed on the uppermost glass fiber reinforced polymer leaf spring so as to be multiple as a whole but independent one another. When the repeated loads which are caused by the motion of the vehicle comes to the leaf, carbon fibers are breaked. Consequently, a resistance meter determines the quantity of the breaked fibers and the wear limit of the spring is determined. Although the leaf spring used in said document is one piece and the damage assessment is made by electrical resistance measurement, it is only possible to determine the damages in the regions where the carbon fibers are placed. Actually, the damage is first occured in weaker polymer matrices as matrix cracking or delaminations in the fiber reinforced polymer based materials. Therefore, it is not possible to determine the matrix damages with the method used in this document because the matrix material is produced by nonconductive polymers. In other words, it is also not possible to determine the damage three-dimensionally which may occurs at the transverse, longitudinal, and vertical cross-section of each leaf spring.

In the present study, it is possible to determine the damage as a whole because the polymer matrix structure produced with highly conductive nanoparticles are distributed three-dimentionally in the internal structure of the leaf spring, on the contrary to the closest prior art mentioned above.

### Brief Description of the Invention

The present invention provides a leaf spring system allowing detection of a malfunction with various ways in order to resolve the problems faced in the leaf springs of the prior art documents mentioned above and in other composite leaf springs. Said system comprises a leaf spring (2) which comprises a series of fiber fabric layers exposed to a polymeric resin with electrically conductive nanoparticles, and therefore provides electrical conductivity with nanoparticle matrices along the entire fiber fabric layers; a current generator (6) in order for passage of electrical current throughout said leaf spring (2); a control unit (7) which is connected to both ends of said leaf spring (2) via conductors and measuring the resistance throughout the spring (2), said control unit (7) generates an electrical signal in case of that said unit (7) measures a resistance above the predetermined threshold; and a warning means in order to convert the electrical signal generated by said control unit (7) to a warning signal.

There may be provided bushes (5) at the ends of the leaf spring (2) according to the present invention in order to fix the spring (2) to the vehicle chassis. Said bushes (5) may be made of aluminum or steel. Therefore, said control unit (7) can be connected electrically to the bushes (5) and the measurement on the spring (2) structure without having any conductivity problem is possible when the surfaces of these bushes (5) which contact to the spring (2) are coated with silver.

Nanoparticles used in the production of the spring (2) of the leaf spring system of the present invention is selected from materials having electrical conductivity, preferably carbon, graphite, graphene oxide and similar materials or combinations thereof.

The polymeric resin used herein is preferably an epoxy resin. The fiber fabric used in the preferred embodiments comprises preferably glass fiber or carbon fiber.

The system allowing detection of a malfunction via the resistance change on the leaf spring (2) also works with the principle of forming a circuit by the conductors connected to both ends of the spring (2). It is advantageous to provide a rheostat (8) besides the control unit (7) and the current generator (6) in said circuit. Said control unit (7) can be connected to the current generator (6) and/or rheostat (8) in order to adjust the current and/or the resistance in the circuitry. Said current generator (6) is preferred to be a constant current generator for the sake of correct measurement in the circuitry.

In another aspect, the invention is also related to a method in order to produce the leaf spring system mentioned above, and said method comprises the steps of:
- incorporating nanoparticles having electrical conductivity into a polymeric resin,
- laying fiber fabrics on a mold in the form of superimposed layers,
- applying said resin to each fiber fabric layer, and thereby forming an electrically conductive nanoparticle matrix network structure in each fiber fabric layer,
- thermal curing of the material,
- forming the leaf spring (2) by cutting the cured material,
- connecting a current generator (6) so as to provide a circuit with both ends of the leaf spring (2),
- connecting a control unit (7) which measures the total resistance or current of the cicuit, and generating an electrical signal in case of that said unit (7) measures a resistance value above a predetermined threshold resistance and a current value below a predetermined threshold current, and
- providing a warning means generating a warning signal depending on the electrical signal generated by said control unit (7).

In the scope of this method, preferably the method laying with hand is used in the production step of the leaf spring (2). A three-dimensional conductive matrix structure is provided in the internal structure of the leaf spring by means of the system and the method of the invention, and thereby it is possible to detect breakage, cracking, and heavy deformation in real time which may occur in the internal structure of the spring (2). The details of the invention and the advantageous embodiments are given in the detailed description below.

### Brief Description of the Figures

Figure 1 shows a perspective view of a composite leaf spring system according to the present invention.
Figure 2 shows a perspective view of another composite leaf spring system according to present invention whose connection is provided with bushes.

### Description of the References

1. The insulating material which prevents the conductivity between the chassis of the vehicle and the leaf spring.
2. Composite leaf spring
3. Bolt hole which provides connection of the leaf spring to the vehicle.
4. Bolt which connects the composite leaf spring and the bushes one another.
5. Bush
6. Current generator
7. Control unit
8. Rheostat

### Detailed Description of the Invention

Leaf springs are the important elements used in the suspension systems of the vehicles in order to absorb the vibrations caused by the different reasons during the movement of the vehicles. This task is performed by means of their energy storage and release abilities. Composite materials are the ideal materials for leaf springs because they provide high energy storage capacity, low weight and excellent corrosion resistance. However, internal structure damages such as matrix cracking, fiber breakage, and delamination are occured by time in the leaf springs produced by composite materials because of the fatigue effect. Polymer matrix is three-dimensional and composed of large molecules fused to one another. Cracks and breakages in said matrix are occured in three-dimensions, namely in the transverse, longitudional and vertical directions and said cracks can progress further in time. It is very important to detect these damages before they cause bigger damages.

There is hereby developed springs and a warning system specifically produced for detection of damages occuring in nano-reinforced composite leaf springs before they reach to a critical level. Said warning system allows to predetermine the damages occured in fiber reinforced polymer composite leaf springs. "Nanoparticles" are used for electrical conductivity in the spring sheets of the system of the present invention. "Nanoparticles" in the scope of the invention refer to any material having electrical conductivity, and said nanoparticles are preferably selected from carbon, graphite, graphene oxide and the like or combinations thereof. A conductive matrix material is generated by mixing electrical conductive nanoparticles with a polymer resin homogeneously in suitable proportions. The polymer resin is a thermoset or a thermoplastic polymer, and it is preferably an epoxy resin.

A composite leaf spring (2) is produced by combining the resin having nanoparticles with a reinforcing material. As an important matter, it is aimed to enable electrical conductivity of spring structure as a whole by applying said epoxy resin having nanoparticles into the reinforcing material in its entirety. The inventors have noted that polymeric resin can perfectly be applied to the entire fabric structure if said reinforcing material (fiber fabric) is a glass fiber or carbon fiber fabric. Said reinforcing material is preferably carbon fiber.

Electrical conductivity in the leaf spring (2) is obtained as a result of these processes. When the leaf spring (2) is produced, the first resistance of the leaf spring is measured and recorded, and said networks established between nanoparticles are broken as the material is damaged under normal operation conditions. When the networks having electrical conductivity are broken because of the micro damages, a change in electrical resistance captured in real time is occured. The resistance of the leaf spring (2) increases in comparison with the first resistance as a result of the reduction of electrical conductivity and it is observed that a damage on the leaf spring is occured. When a critical resistance change corresponding to a critical damage is determined, a warning is sent to the user in order to take the required precautions. This warning is delivered to the user with an electronic circuit mounted into the vehicle and possible greater damages can be prevented.

The preferred method in order to produce the leaf springs of the present invention is *the method based on laying with hand.*

Said method comprises the following steps;
- incorporating and homogenizing nanoparticles having electrical conductivity into a polymeric resin,
- laying of fiber fabrics on a mold as superimposed layers,
- applying said resin into each of the said fiber fabric layers, and
- thermal curing of the material.

As an exemplary embodiment, firstly, carbon nanotubes are mixed into epoxy matrix homogeneously in laying with hand method with a high speed homogenizer. Necessary mold release agents are spreaded to specially produced molds in order for the production of designed leaf spring. The resined glass fiber fabrics are then layed into this mold until the required thickness is obtained. Afterwards, the upper part of this mold is exposed to hot press in for curing. Preferably, the pressure may be araound 10 bar, the temperature may be 80 °C and the holding period may be about 2 hours.

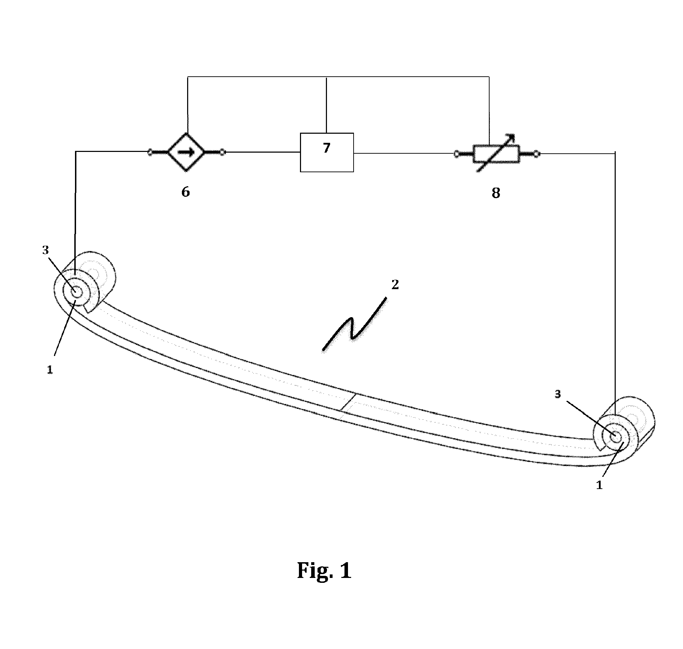

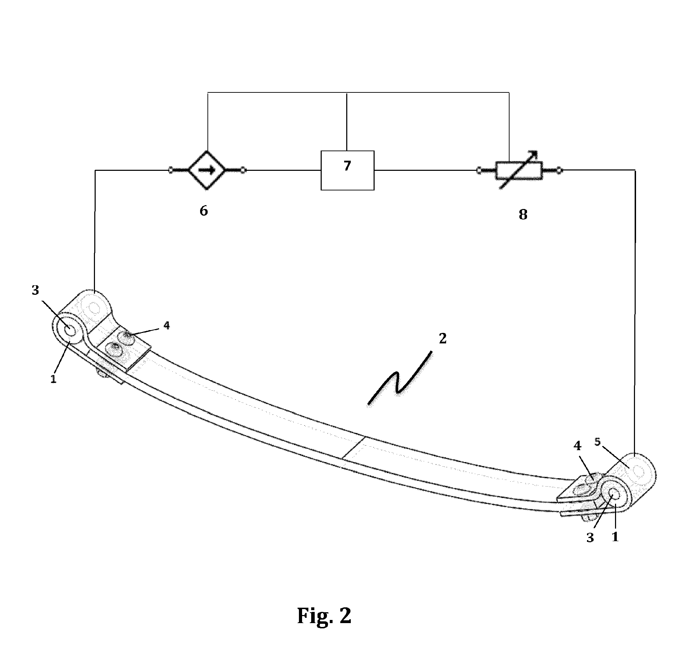

When thermal curing of the material is completed, it is cut after removing from the mold. As seen in the examplary embodiment given in Figure 1, the bush (5) for mounting the leaf spring to the chasis body of the vehicle can be formed as one single piece, or it can also be connected as a seperate bush part to the leaf spring (2) as shown in Figure 2. In this second situation, the bushes (5) produced preferably from steel or aluminum material are mounted to the composite leaf spring (2) by means of bolts (4). Electrical conductivity is provided by silver coating of the contacting surfaces between composite leaf spring (2) and the bushes (5).

An insulator (1) produced from rubber material can be placed into the bushes (5) of the connection points of the product in order for not to affect the electrical resistance of the leaf spring from the chasis of the vehicle. Connection of the composite leaf spring (1) to the vehicle is realized by means of bolt holes (3).

This resistance change is observed in real time by means of a specifically developed control unit (7) after measuring the electrical resistance of the leaf spring easily between the bushes (5) in the both ends. When the resistance value reaches to a critical value as the resistance value is measured continuously, a warning is sent to the user by means of a control unit (7) based on said measured value of the resistance. In this context, in another aspect the system of the present invention comprises a circuitry formed by conductors connected to the two corresponding ends of the composite leaf spring (2). A current is passed continuously throughout the leaf spring by proving a current generator (6) in this circuit. The power required for this current can be supplied from accumulator of the vehicle. It is advantageous that said current generator (6) is a "constant current generator" for the sake of obtaining instantly correct measurements. In this sense, the control unit (7) comprises an ohmmeter or an ampermeter in its own structure. The resistance measurement depending on current is possible because the current flowing throughout the circuit is inversely proportional to the resistance of the circuit. The deformation degree on the leaf spring (2) is determined by comparing the measured resistance value with the predetermined threshold value. An electrical signal produced by the control unit (7) is sent to a warning means (not shown) when the resistance value exceeds the threshold value. The control unit (7) is preferably connected to said current generator (6). Therefore, in the preferred embodiments the control unit (7) can take measurements at different current values by changing the current. It is advantageous to measure at more than one current value for obtaining reliable results because of time dependant deformations and the deformations depending on loads on the spring (2).

In preferred embodiments of the present invention, the reliability of the system is enhanced by adding a rheostat (8) to the circuitry. The rheostat (8) provides adjustability of warning production level by adding resistance to the circuitry. In addition, it is possible to prevent undesired wrong warning signals because during the first installation of the system, control unit (7) can be easily calibrated to a certain threshold level of the resistance. Therefore, it is particularly preferred that the control unit (7) is connected to the rheostat (8) in order to control the same.

The control unit (7) of the present invention is designed such that it warns the user of a breakdown or damage with a warning means. Said warning means may be in the form of a massage to a cell phone, a warning light, a warning voiceetc.

Damages such as matrix cracks or delamination in any part produced from composite material may occur even at the production stage. At the same time, separations may occur in the layers which are close to the midplane because the targential stresses are active in the midplane of the leaf spring that is produced as a single piece. Said damages are determined easily with the present invention and a damage which would occur in any portion of the leaf spring can be determined.

User of the vehicle is warned for going to the closest service station, by means of the system of the present invention, when a damage in the leaf spring is detected. Therefore, for instance the present invention can be integrated to the trip computer or a navigation sytem of the vehicle. It is possible to prevent loss of life and property by means of this method which prevents the complete and dangerous damage of the leaf spring.

## Claims

1. A leaf spring system for damage detection in the leaf spring (2) **characterized in that** said system comprises;
- a leaf spring (2) which comprises a series of fiber fabric layers exposed to polymeric resin having electrically conductive nanoparticles, said leaf spring (2) providing electrical conductivity with nanoparticle matrices along the entirity of fiber fabric layers,
- a current generator (6) for passing of an electrical current throughout said leaf spring (2),
- a control unit (7) which is connected to both ends of said leaf spring (2) via conductors, said control unit (7) measuring resistance or current throughout the spring (2), and generating an electrical signal in case of that said unit (7) measures a resistance above a predetermined threshold value of resistance or a current value below a predetermined threshold value of current; and
- a warning means in order to convert the electrical signal generated by said control unit (7) to a warning signal.

2. A leaf spring system according to claim 1, wherein said system comprises bushes (5) at the ends of the leaf spring (2) in order to fix the spring (2) to chassis of a vehicle.

3. A leaf spring system according to claim 2, wherein said bushes (5) are made of aluminum or steel.

4. A leaf spring system according to claim 2, wherein said control unit (7) is electrically connected to the bushes (5), and the surfaces of said bushes (5) contacting to the leaf spring (2) comprise a silver coating.

5. A leaf spring system according to claim 1, wherein said electrically conductive nanoparticles are selected from a group consisting of carbon, graphite and graphene oxide.

6. A leaf spring system according to claim 1, wherein said polymeric resin in an epoxy resin.

7. A leaf spring system according to claim 1, wherein said fiber fabric is made of glass fiber or carbon fiber.

8. A leaf spring system according to claim 1, wherein the electrical circuit having a control unit (7) and a current generator (6) further comprises a rheostat (8).

9. A leaf spring system according to claim 8, wherein said control unit (7) is connected to the current generator (6) and/or rheostat (8) in order to adjust the current and/or the resistance of the circuitry.

10. A leaf spring system according to claim 1, wherein said current generator (6) is a constant current generator.

11. A method for producing the leaf spring system according to claim 1, wherein said method comprises the steps of:
- incorporating and homogenizing nanoparticles having electrical conductivity in a polymeric resin,
- laying of fiber fabrics on a mold as superimposed layers,
- applying said resin to each fiber fabric layer, and thereby forming an electrically conductive nanoparticle matrix network structure in each fiber fabric layer,
- thermal curing of the material,
- forming of the leaf spring (2) by cutting the cured material,
- connecting a current generator (6) so as to provide a circuitry with both ends of the leaf spring (2),
- connecting a control unit (7) for measuring total resistance or current of the cicuit, said control unit (7) generating an electrical signal in case of that said unit (7) measures a resistance value above the predetermined threshold value of resistance and a current value below the predetermined threshold value of current, and
- providing a warning means generating a warning signal depending on the electrical signal generated by said control unit (7).

12. A method according to claim 11, wherein the production process of the leaf spring (2) comprises the method involving laying by hand.

13. A method according to claim 11, wherein said nanoparticles are selected from a group consisting of carbon, graphite and graphene oxide; said polymeric resin being an epoxy resin; and said fiber being a glass fiber or carbon fiber.

14. A method according to claim 11, wherein said current generator (6) is a constant current generator and said system comprises a rheostat (8).

15. A use of the leaf spring system according to claim 1 in manufacturing of a motor vehicle.
